(19) Europäisches Patentamt
European Patent Office
Office européen des brevets

(11) EP 4 438 762 A1

(12) EUROPEAN PATENT APPLICATION
published in accordance with Art. 153(4) EPC

(43) Date of publication:
02.10.2024 Bulletin 2024/40

(21) Application number: 22898981.0

(22) Date of filing: 22.11.2022

(51) International Patent Classification (IPC):
C22C 38/38 (2006.01)  C22C 38/34 (2006.01)
C22C 38/22 (2006.01)  C22C 38/28 (2006.01)
C22C 38/32 (2006.01)  C22C 38/60 (2006.01)
C22C 38/00 (2006.01)  C21D 8/02 (2006.01)
C23G 1/02 (2006.01)  C23C 2/06 (2006.01)

(52) Cooperative Patent Classification (CPC):
C21D 8/02; C22C 38/00; C22C 38/22; C22C 38/28;
C22C 38/32; C22C 38/34; C22C 38/38;
C22C 38/60; C23C 2/06; C23G 1/02

(86) International application number:
PCT/KR2022/018467

(87) International publication number:
WO 2023/096299 (01.06.2023 Gazette 2023/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.11.2021 KR 20210164203

(71) Applicant: POSCO Co., Ltd
Pohang-si, Gyeongsangbuk-do 37859 (KR)

(72) Inventors:
• SONG, Tae-Jin
  Gwangyang-si, Jeollanam-do 57807 (KR)
• RYU, Joo-Hyun
  Gwangyang-si, Jeollanam-do 57807 (KR)
• LEE, Je-Woong
  Gwangyang-si, Jeollanam-do 57807 (KR)

(74) Representative: Meissner Bolte Partnerschaft mbB
Patentanwälte Rechtsanwälte
Postfach 86 06 24
81633 München (DE)

(54) ULTRAHIGH-STRENGTH HOT-ROLLED STEEL SHEET HAVING EXCELLENT FORMABILITY AND MANUFACTURING METHOD THEREFOR

(57) The present invention relates to a hot-rolled steel sheet that can be suitably applied to an automobile chassis structure member or the like and, more specifically, to an ultrahigh-strength hot-rolled steel sheet having excellent formability and uniform material inside the steel sheet, and a manufacturing method therefor.

[FIG. 1]

EP 4 438 762 A1

**Description**

Technical Field

The present disclosure relates to a hot-rolled steel sheet suitably applicable to a structural chassis member of a vehicle, and the like, and more specifically, to an ultrahigh-strength hot-rolled steel sheet having excellent formability and uniform material distribution in the steel sheet, and a manufacturing method therefor.

Background Art

To reduce recent global warming, a transition from internal combustion engine vehicles, which are the mainstream of the automobile market, to eco-friendly vehicles such as electric vehicles is rapidly taking place.

As internal combustion engine vehicles move to electric vehicles, the types of components constituting automobiles also change, and a weight of the vehicle is also changing at the same time. For example, comparing the weight of internal combustion engine vehicles and electric vehicles released as the same model, it is known that the weight of an electric vehicle increases by approximately a weight of a battery as compared to an internal combustion engine vehicle.

On the other hand, a chassis component of a vehicle serves to support a vehicle body, and is a decisive component in securing ride comfort and driving stability by absorbing vibrations and impacts of a road surface during driving. As the weight of the vehicle increases, fatigue load applied to the chassis component increases, and thus, a steel material applied to a chassis component of an electric vehicle is required to have excellent fatigue strength.

Since the fatigue strength of the steel material is proportional to tensile strength and yield strength, the steel material applied to the chassis component of the electric vehicle needs to have tensile strength and yield strength thereof improved.

Furthermore, since the chassis components are manufactured by press forming, the chassis components are required to secure formability such as elongation suitable for press forming and hole expandability, in addition to improving the tensile strength and yield strength to improve fatigue strength. However, when there is a region in a steel sheet in which a microstructure is non-uniform to locally deteriorate formability, processing cracks may occur during press forming, which may cause a decrease in productivity. Accordingly, it may be decisive to manufacture a steel sheet such that formability, such as elongation and hole expandability, is evenly distributed in the steel sheet. In the case of a hot-rolled steel sheet used as a chassis member, since a temperature of the steel sheet is controlled by cooling water after hot rolling, local temperature deviations may cause shape defects during cooling, and the shape defects may cause temperature deviations, to result in a high possibility that material deviation may increase, and accordingly, it may be decisive to prevent temperature variation from occurring in a steel sheet when manufacturing the steel sheet. Specifically, in the case of an ultrahigh-strength-steel sheet in which a large amount of low-temperature bainite and martensite is used as a microstructure, special attention is required because the possibility of shape defects may increase due to rapid cooling and rapid phase transformation.

Until now, various technologies have been proposed to improve the strength and formability of a hot-rolled steel sheet.

For example, Patent Document 1 discloses a method of forming a lower bainite phase and/or tempering martensite of 90% or more with a total area ratio of a microstructure of steel by performing hot rolling and then cooling to an Ms temperature or less and 200°C or more. According to Patent Document 1, the tensile strength of a hot-rolled steel sheet may be 1180 MPa or more, and the hot-rolled steel sheet may secure excellent elongation flange formability and bending properties, but because the hot-rolled steel sheet is cooled by water cooling to temperatures below Ms, there may be a concern about shape defects due to a rapid phase transformation behavior of martensite and the resulting material deviation in the steel sheet.

Therefore, in order to secure driving stability of chassis components of eco-friendly vehicles such as an electric vehicle, it may be necessary to develop a steel material in which a material in a steel sheet is uniform simultaneously with having excellent formability such as elongation and hole expandability so that the tensile strength and yield strength increase to have an excellent fatigue lifespan, and press forming may be easily performed.

[Patent Document 1] Japanese Patent Application No. 2019-553584

Summary of Invention

Technical Problem

An aspect of the present disclosure is to provide a hot-rolled steel sheet suitable for press forming because of high strength, excellent fatigue performance, and excellent formability, and having uniform material distribution in the steel sheet, and a manufacturing method therefor.

The object of the present disclosure is not limited to the above-described matters. A person of ordinary skill in the art to which the present disclosure belongs will have no difficulty in understanding the additional object of the present disclosure from the contents described in the specification of the present disclosure.

Solution to Problem

According to an aspect of the present disclosure,

provided is an ultrahigh-strength hot-rolled steel sheet, including: by wt%, carbon (C): 0.06 to 0.18%, silicon (Si): 0.01 to 1.8%, manganese (Mn): 1.6 to 3.5%, aluminum (Al): 0.001 to 0.1%, chromium (Cr): 2.5 % or less (including 0%), molybdenum (Mo): 2.0% or less (including 0%), titanium (Ti): 0.01 to 0.15%, boron (B): 0.0005 to 0.003%, phosphorus (P): 0.0001 to 0.05 %, sulfur (S): 0.0001 to 0.05%, nitrogen (N): 0.0001 to 0.02%, and a balance of Fe and other inevitable impurity elements,
wherein a microstructure comprises, in area fraction, one or more selected from low-temperature bainite and martensite: 75 to 90%, one or more selected from acicular ferrite and bainitic ferrite: 10 to 25%, and other phases: 5% or less (including 0%).

According to another aspect of the present disclosure,

provided is a method for manufacturing an ultrahigh-strength hot-rolled steel sheet, the method comprising: reheating a steel slab at a temperature range of 1100 to 1350°C, the steel slab comprising, by wt%, carbon (C): 0.06 to 0.18%, silicon (Si): 0.01 to 1.8%, manganese (Mn): 1.6 to 3.5%, aluminum (Al): 0.001 to 0.1%, chromium (Cr): 2.5 % or less (including 0%), molybdenum (Mo): 2.0% or less (including 0%), titanium (Ti): 0.01 to 0.15%, boron (B): 0.0005 to 0.003%, phosphorus (P): 0.0001 to 0.05 %, sulfur (S): 0.0001 to 0.05%, nitrogen (N): 0.0001 to 0.02%, and a balance of Fe and other inevitable impurity elements,
manufacturing a hot-rolled steel sheet by hot rolling the reheated steel slab;
primarily cooling the hot-rolled steel sheet to a temperature equal to or less than Bs at an average cooling rate of 50°C/s or more;
after the primary cooling, performing secondary cooling for ts time(seconds) at an average cooling rate of 25°C/s or less to a temperature equal to or higher than (Bs+Ms)/2;
after the secondary cooling, performing tertiary cooling at an average cooling rate of 30°C/s or more to a temperature range of Ms°C to 500°C; and
coiling in the tertiary cooling temperature range,
wherein during the hot rolling, finish hot rolling is performed so that a value of Du, defined by the following relational expression 1, satisfies a range of 2 to 10 in a temperature range of 750 to 1150°C,

$$Du = \{FDT + (7.4 \times [C]) - (24.7 \times [Si]) - (4.7 \times [Mn]) - (3.9 \times [Cr]) - (5.2 \times [Mo]) - (560 \times [Ti]) - (1110 \times [Nb])\} \times 0.049 - 34.2,$$  <Relational Expression 1>

where FDT refers to a rolling end temperature (°C), and each of [C], [Si], [Mn], [Cr], [Mo], [Ti] and [Nb] represents a weight percent content of an element in parentheses.

Advantageous Effects of Invention

According to an aspect of the present disclosure, provided is a hot-rolled steel sheet having tensile strength of 1180 MPa or more, excellent formability, and uniform material in the steel sheet, and a manufacturing method therefor. Accordingly, the hot-rolled steel sheet may be suitably applied to a chassis structure member of an automobile.
Various useful advantages and effects of the present disclosure are not limited to the above and may be relatively easily understood in a process of describing embodiments of the present invention.

Brief Description of Drawings

FIG. 1 is a graph illustrating a relationship between a content of boron and Du in which Relational Expressions 1 and 2 are simultaneously satisfied, which may secure a microstructure intended in the present disclosure in a solid line connecting A-B-C-D-E-F.

FIG. 2 shows an image by observing a microstructure of Inventive Example 1 (a) and Comparative Example 5 (b) with a scanning electron microscope (SEM).

Best Mode for Invention

Hereinafter, preferred embodiments of the present disclosure will be described. However, embodiments of the present disclosure may be modified into various different forms, and the scope of the present disclosure is not limited to embodiments described below. Furthermore, embodiments of the present disclosure are provided to more fully explain the present disclosure to those who have average knowledge in the art.

The terms used in the present specification are intended to describe specific embodiments and are not intended to limit the present disclosure. In addition, singular forms used in the present specification include plural forms unless the relevant definition indicates the opposite meaning. Furthermore, the meaning of "include" used in the specification specifies the configuration and does not exclude the existence or addition of other configurations.

As a conventional method of manufacturing a hot-rolled steel sheet to obtain ultrahigh strength with tensile of 1180 MPa or more, a method of cooling a steel sheet at an Ms temperature or less by spraying a large amount of cooling water after hot rolling and using martensite as a main phase has been widely applied. However, when martensite is the main phase, there may be a problem in that elongation, bendability, and hole expandability may deteriorate. Furthermore, due to shape defects caused by rapid lattice expansion during cooling and temperature unevenness in the steel sheet, areas in which phase transformation residual stress is concentrated are created in the sheet, and thus, there may be a problem with molding cracks occurring during molding for processing components.

Accordingly, the present inventors have found that simultaneously with using bainite and martensite to secure ultrahigh strength, formability may be secured by dispersing acicular ferrite or bainitic ferrite uniformly in a structure to prevent excessive concentration of stress in a specific location during deformation. Furthermore, the present inventors have confirmed that by avoiding rapid formation of martensite by coiling a steel sheet at an Ms temperature or higher, it was possible to provide an ultrahigh-strength hot-rolled steel sheet having uniform materials in the steel sheet, and have completed the present invention. Hereinafter, the present disclosure will be described in more detail.

An ultrahigh-strength hot-rolled steel sheet according to an aspect of the present disclosure, may include: by wt%, carbon (C): 0.06 to 0.18%, silicon (Si): 0.01 to 1.8%, manganese (Mn): 1.6 to 3.5%, aluminum (Al): 0.001 to 0.1%, chromium (Cr): 2.5 % or less (including 0%), molybdenum (Mo): 2.0% or less (including 0%), titanium (Ti): 0.01 to 0.15%, boron (B): 0.0005 to 0.003%, phosphorus (P): 0.0001 to 0.05 %, sulfur (S): 0.0001 to 0.05%, nitrogen (N): 0.0001 to 0.02%, and a balance of Fe and other inevitable impurity elements.

Hereinafter, the reasons for adding components to a hot-rolled steel sheet and the reasons for limiting contents thereof in the present disclosure will be described in detail. Meanwhile, in the present disclosure, unless specifically stated, the content of each element is based on weight, and a ratio of the structure is based on area.

Carbon (C): 0.06 to 0.18%

Carbon (C) is the most economical and effective element in strengthening steel, and as the content of carbon (C) increases, the strength of the steel sheet increases. In the present disclosure, carbon (C) exists in a fine carbide or solid solution state in lower bainite and martensite and plays a role in improving the yield strength and tensile strength of steel.

If the content of carbon (C) is less than 0.06%, it may be difficult to secure tensile strength of 1180 MPa or more, but when the content of carbon (C) exceeds 0.18%, there may be a problem in that weldability may deteriorate. Accordingly, in the present disclosure, carbon (C) may be included in an amount of 0.06 to 0.18%, and more advantageously, a lower limit of the C content may be 0.07%, and more preferably 0.09%. Additionally, an upper limit of the C content may be 0.15%.

Silicon (Si): 0.01 to 1.8%

Silicon (Si) is an element improving the hardenability of steel and plays a role in improving strength through a solid solution strengthening effect. Additionally, silicon (Si) may improve strength by preventing the formation of ferrite during cooling and allowing the formation of lower bainite and/or martensite phases.

When the content of silicon (Si) is less than 0.01%, a solid solution strengthening effect and a ferrite transformation delay effect may be lowered, making it difficult to secure tensile strength. On the other hand, when the Si content exceeds 1.8%, Fe-Si complex oxide is formed on a slab surface when a slab is reheated, and thus, not only does the surface quality of the steel sheet deteriorate, but weldability also deteriorates.

Accordingly, in the present disclosure, silicon (Si) may be included in an amount of 0.01 to 1.8%, more advantageously 0.1% or more, and even more advantageously, a lower limit of the Si content may be 0.2%. Additionally, an upper limit of the Si content may be 1.5%, and more preferably 1.3%.

Manganese (Mn): 1.6 to 3.5%

Manganese (Mn) is an element improving the hardenability of steel, and preventing the formation of ferrite during cooling after finish rolling, facilitating the formation of a low-temperature transformation structure. When the content of manganese (Mn) is less than 1.6%, there may be a problem in that hardenability may be insufficient , and a fraction of ferrite may increase excessively. On the other hand, when the Mn content exceeds 3.5%, the hardenability may increase significantly, and the holding time for sufficiently forming acicular ferrite or bainitic ferrite desired in the present disclosure may increase excessively to reduce elongation. Accordingly, in the present disclosure, Mn may be included in an amount of 1.6 to 3.5%, and more advantageously, a lower limit of the Mn content may be 1.8%, or an upper limit of the Mn content may be 2.5%.

Aluminum (Al): 0.001~0.1%

Aluminum (Al) is an element added to deoxidize molten steel, and a portion thereof is present in the steel after deoxidation. When the content of aluminum (Al) exceeds 0.1%, oxide and nitride-based inclusions increase in the steel, thereby deteriorating the formability of the steel sheet. On the other hand, when the Al content is less than 0.001%, this may be economically disadvantageous because excessive reduction of Al causes unnecessary increase in refining costs. Accordingly, in the present disclosure, Al may be included in an amount of 0.001 to 0.1%, and more advantageously, a lower limit of the Al content may be 0.005%, or 0.02%. Additionally, more advantageously, an upper limit of the Al content may be 0.05%, or may be 0.025%.

Chromium (Cr): 2.5% or less (including 0%)

Chromium (Cr) is an element improving the hardenability of steel and suppressing the formation of ferrite during cooling after finish rolling. When the content of Chromium (Cr) exceeds 2.5%, hardenability may increase significantly and bainite transformation does not occur smoothly in a cooling section, and thus, the holding time to secure the fraction of acicular ferrite or bainitic ferrite may increase excessively, to result in a decrease in the elongation. Accordingly, in the present disclosure, Cr may be included in an amount of 2.5% or less, and more advantageously, may be included in an amount of 1.5% or less. Meanwhile, according to an embodiment of the present disclosure, more preferably, an upper limit of the Cr content may be 0.9%.
Meanwhile, the present disclosure includes a case in which the Cr content is 0% because there is no significant difficulty in securing the intended physical properties even if the Cr is not included. However, when Cr is intentionally added, it may be effective to add at least 0.01%.

Molybdenum (Mo): 2.0% or less (including 0%)

Molybdenum (Mo) is an element improving the hardenability of steel, playing a role in improving strength through a solid solution strengthening effect, and suppressing the formation of ferrite during cooling after finish rolling. When the content of Molybdenum (Mo) exceeds 2.0%, the hardenability may increase significantly and bainite transformation does not occur smoothly in a cooling section. As a result, the holding time for securing the fraction of acicular ferrite or bainitic ferrite increases excessively, to result in a decrease in the elongation.
Accordingly, in the present disclosure, Mo may be included in an amount of 2.0% or less, more advantageously in an amount of 1.0% or less, and even more advantageously in an amount of 0.5% or less.
Meanwhile, the present disclosure includes a case in which the Mo content is 0% because there is no significant difficulty in securing the intended physical properties even if the Mo is not included. However, it should be noted that when adding Mo, it may be effective to add at least 0.01%.

Titanium (Ti): 0.01 to 0.15%

Titanium (Ti) is an element forming carbonitride in steel, and in this manner, Titanium (Ti) is widely used to secure the strength of steel by inducing the formation of precipitates, but in the present invention, Titanium (Ti) is used to suppress the formation of BN by removing nitrogen (N) in steel, thereby allowing boron (B) to concentrate at austenite grain boundaries, and to control a grain size of austenite before rolling.
In order to sufficiently obtain a targeted effect in the present disclosure, Ti may be included in an amount of, preferably, 0.01% or more, and in order to remove nitrogen (N) in steel, Ti may include, preferably, 2.9 times or more of the content of nitrogen (N). However, when the Ti content exceeds 0.15%, oxides may be formed during continuous casting, which may cause problems such as clogging of casting nozzles.

Accordingly, in the present disclosure, Ti may be included in an amount of 0.01 to 0.15%, and more advantageously, a lower limit of the Ti content may be 0.02%, or an upper limit of the Ti content may be 0.12%.

Boron (B): 0.0005 to 0.003%

Boron (B) is an element improving the hardenability of steel by concentrating at austenite grain boundaries and reducing grain boundary energy. In the present disclosure, Boron (B) suppresses the phase transformation of ferrite and upper bainite, where nucleation of phase transformation occurs through diffusion transformation at austenite grain boundaries, and plays a role in securing lower bainite and martensite as a main phase.

In order to sufficiently obtain a targeted effect in the present disclosure, the concentration of B may be included in an amount of 0.0005% or more. However, when the content of Boron (B) exceeds 0.003%, the hardenability may increase significantly, and thus, the holding time to sufficiently form acicular ferrite or bainitic ferrite desired in the present disclosure may increase excessively, to result in a decrease in the elongation.

Accordingly, in the present disclosure, B may be included in an amount of 0.0005 to 0.003%, and more advantageously, a lower limit of the B content may be 0.001%, or an upper limit of the B content may be 0.0025%.

Phosphorus (P): 0.0001 to 0.05%

Phosphorus (P) is an impurity inevitably contained in steel and is an element that is the main cause of impeding the workability of steel due to segregation. Accordingly, the content of phosphorus (P) may be controlled to be as low as possible.

In theory, it may be advantageous to limit the P content to 0%, but since excessive manufacturing costs are required to control the P content to being less than 0.0001%, a lower limit may be set to 0.0001%. However, when the content thereof exceeds 0.05%, there may be a risk that processability may be reduced, and thus an upper limit of P may be limited to 0.05%. However, more advantageously, a lower limit of the P content may be 0.0005%, or an upper limit of the P content may be 0.013%.

Sulfur (S): 0.0001-0.05%

Sulfur (S) is an impurity element inevitably included in steel, and forms non-metallic inclusions by combining with Mn, and the like, which may cause a problem in that the workability of steel may be reduced. Accordingly, the content of sulfur (S) may be controlled to be as low as possible.

In theory, it is advantageous to limit the content of sulfur (S) to 0%, but since excessive manufacturing costs are required to control the S content to being less than 0.0001%, a lower limit thereof may be set to be 0.0001%. However, when the content thereof exceeds 0.05%, there may be a risk that processability may be reduced, and an upper limit of the S content may be limited to 0.05%. However, more advantageously, a lower limit of the S content may be 0.0003%, or the upper limit of the S content may be 0.0012%.

Nitrogen (N): 0.0001 to 0.02%

Nitrogen (N) is an impurity element inevitably included in steel, and may have the problem of inhibiting processability of steel by combining with Al to form nitrides. Therefore, it is desirable to control the content thereof to be as low as possible.

In theory, it is advantageous to limit the content of nitrogen (N) to 0%, but since excessive manufacturing costs are required to control the N content to less than 0.0001%, a lower limit may be set to 0.0001%. However, when the content exceeds 0.02%, there may be a risk that processability may deteriorate, and thus, an upper limit of the N content may be limited to 0.02%. However, more advantageously, a lower limit of the N content may be 0.001%, or an upper limit of the N content may be 0.006%.

In addition to the alloy composition described above, the hot-rolled steel sheet of the present disclosure may optionally further include niobium (Nb).

Niobium (Nb): 0.01 to 0.2%

Niobium (Nb) is an element forming carbonitrides in steel, and is widely used to secure the strength of steel by inducing the formation of precipitates. However, in the present invention, niobium (Nb) serves to control a grain size of austenite by delaying recrystallization during hot rolling. When the content of niobium (Nb) is less than 0.01%, the effect of controlling the grain size is reduced, and when the Nb content exceeds 0.2%, the grain size of austenite is significantly fine, which may deteriorate formability. Accordingly, in the present disclosure, the Nb content may be 0.01 to 0.2%.

The remaining component of the present disclosure is iron (Fe). However, in the normal manufacturing process, unintended impurity elements from raw materials or the surrounding environment may inevitably be mixed, which may not be excluded. Since these impurities are known to anyone skilled in the ordinary manufacturing process, all of them are not specifically mentioned in this specification.

The hot-rolled steel sheet of the present disclosure that satisfies the above-described alloy composition includes at least one selected from low-temperature bainite and martensite, which are low-temperature transformation structures, as a base structure, in order to secure yield strength of 900 MPa or more and tensile strength of 1,180 MPa or more. Accordingly, according to an embodiment of the present disclosure, at least one type selected from the low-temperature bainite and martensite may be included in an area fraction of 75 to 90%.

In the present disclosure, after tertiary cooling performed after hot rolling, austenite is transformed into low-temperature bainite or martensite. Since the low-temperature bainite and martensite are generated through displacive phase transformation, a high level of dislocation density exists in a structure due to helical dislocations generated in the structure to reduce shear strain generated during transformation and blade dislocations generated to accommodate volume expansion due to phase transformation. Accordingly, carbon and fine carbides dissolved in the structure are suitable for improving the yield strength and tensile strength of steel. On the other hand, the high level of dislocation density and dissolved carbon and fine carbides impede the movement of dislocations in the structure, which may deteriorate the elongation.

Accordingly, in terms of securing yield strength and tensile strength, the present disclosure preferably includes, by area%, at least 75% of one or more selected from low-temperature bainite (LB) and martensite (M) as low-temperature transformed structures, and in order to simultaneously secure elongation, the low-temperature bainite (LB) and martensite (M) may be limited to 90% or less. Meanwhile, according to an embodiment of the present disclosure, more preferably, a lower limit of the area fraction of one or more selected from the low-temperature bainite and martensite may be 76.9%, or an upper limit of the area fraction of one or more selected from the low-temperature bainite and martensite may be 86.6%.

In the present disclosure, because the low-temperature bainite and martensite commonly include iron carbide at grain boundaries and in the lath structure, the low-temperature bainite and martensite must be managed by the total fraction. Accordingly, in the present disclosure, the area fraction of one or more selected from low-temperature bainite and martensite is managed.

Meanwhile, the hot-rolled steel sheet according to the present disclosure may include, by area fraction, 10 to 25% of at least one selected from acicular ferrite (AC) and bainitic ferrite (BF).

The steel of the present disclosure avoids ferrite phase transformation during primary cooling after hot rolling and is then cooled to a temperature equal to or less than Bs (bainite transformation start temperature), followed by bainite transformation by slow cooling during the subsequent secondary cooling. In this case, bainite transformation occurs in high temperature bainite transformation section. Accordingly, the formation of bainitic ferrite and diffusion of carbon into untransformed austenite occur, and no carbides are formed inside bainitic ferrite. Meanwhile, a large amount of dislocations exist in the bainitic ferrite generated through shear transformation, but a recovery phenomenon after the secondary cooling and subsequent coiling reduces the dislocation density to an appropriate level, thereby improving the elongation of the steel sheet.

Bainitic ferrite generated at the Bs temperature or less has the similar shape and properties to acicular ferrite generated when supercooled in ultralow carbon steel, it should be noted that in the present disclosure, the bainitic ferrite and the asymmetric ferrite are managed by a total fraction thereof. Accordingly, in the present disclosure, the area fraction of one or more selected from acicular ferrite and bainitic ferrite is managed.

When at least one selected from the acicular ferrite and bainitic ferrite is less than 10%, there may be a problem that it may be difficult to secure elongation. On the other hand, when one or more selected from acicular ferrite and bainitic ferrite exceed 25%, there may be a problem in that it may be difficult to secure a low-temperature transformation structure, which serve as improving strength. Meanwhile, according to an embodiment of the present disclosure, a lower limit of the fraction of one or more selected from the acicular ferrite and the bainitic ferrite may be 12.4%, or an upper limit of the fraction of one or more selected from the acicular ferrite and bainitic ferrite may be 21.0%.

In this case, according to an embodiment of the present disclosure, an average size of one or more selected from the acicular ferrite and the bainitic ferrite may be 2.0 um or more.

Meanwhile, according to an embodiment of the present disclosure, more preferably, a lower limit of the average size of one or more selected from the acicular ferrite and the bainitic ferrite may be 3.9 $\mu$m, or an upper limit of the average size of one or more selected from the acicular ferrite and bainitic ferrite may be 6.2 $\mu$m.

Additionally, according to an embodiment of the present disclosure, an average interval of one or more selected from the acicular ferrite and the bainitic ferrite may be 3 um or more. According to an embodiment of the present disclosure, more preferably, a lower limit of the average interval of one or more selected from the acicular ferrite and the bainitic ferrite may be 6.2 $\mu$m, or an upper limit of the average interval of one or more selected from the acicular ferrite and bainitic ferrite may be 13.2 um.

In this case, an average size of one or more selected from the acicular ferrite and bainitic ferrite refers to a diameter equivalent to a circle, and an average interval of one or more selected from the acicular ferrite and bainitic ferrite refers to the average of distances between the five closest structures for each microstructure.

The low-temperature bainite and martensite generated after the tertiary cooling begin phase transformation first at a point in austenite in which nucleation is easily performed. Then, as the phase transformation continues to occur, internal dislocation density becomes excessively high at a point in which final phase transformation occurs, which may make it easy for stress to concentrate during the molding process, and thus, there may be a problem in that fine-sized cracks may be generated in the structure to deteriorate the pore expandability. On the other hand, when soft acicular ferrite or bainitic ferrite is evenly distributed in an appropriate size in a low-temperature transformation structure, which is a base structure, the hole expandability is improved by preventing local concentration of stress by evenly accepting deformation during molding.

Accordingly, when an average size of one or more selected from acicular ferrite and bainitic ferrite as soft structures is less than 2.0 um, since an effect of accommodating strain is reduced, improvement in hole expandability may not be expected. Furthermore, when an average interval of one or more selected from acicular ferrite and bainitic ferrite is less than 3.0 um, the fraction of soft steel may increase excessively to deteriorate the yield strength and tensile strength. An upper limit of the average size and an upper limit of the average interval of the soft structures are not separately regulated, but under the condition that the total fraction of the soft structure satisfies a range of 10 to 25%, an average size of the soft structure may be 20 um or less, and an average interval of the soft structure may be 20 um or less.

In addition to the above-described structure, the hot-rolled steel sheet of the present disclosure may include ferrite, carbide, and residual austenite, as other phases in addition to the above-described structure, which may preferably be controlled to an area fraction of 5% or less. Here, the above-described ferrite denotes granular ferrite.

Specifically, ferrite generated during cooling after hot rolling is typically generated through diffusion transformation and thus has low strength. By controlling this ferrite to 5% or less (including 0%), after ferrite is formed, previously formed ferrite undergoes shear strain to accommodate lattice strain generated when residual austenite is transformed into bainite and martensite. Accordingly, it was confirmed that dislocation density in ferrite is maintained on a high level, and even if other phases such as ferrite were included in an amount of 5% or less, and the strength of the steel was not significantly reduced. However, when the ferrite fraction exceeds 5%, the strength of the steel may decrease, which is undesirable.

Meanwhile, carbides may be generated in the manufacturing process of this product. Since the present disclosure seeks to improve strength by utilizing a low-temperature transformation structure as a second phase, the formation of carbides may cause a decrease in the second phase fraction. In other words, excessive production of carbides inhibits the strengthening effect targeted by the present disclosure. However, when Ti and Nb are present in the phase, alloy carbonitride may be formed, and in this case, additional strengthening effect may be expected by grain refinement, but since coarse carbide impedes the toughness of the steel, the amount of carbide present in the hot-rolled steel sheet of the present disclosure may be less than 5%.

Additionally, according to an embodiment of the present disclosure, the hot-rolled steel sheet may include only retained austenite as a microstructure as the other phases described above. Accordingly, the hot-rolled steel sheet may include by area %, 5% or less (including 0%) of retained austenite as a microstructure. When generating bainitic ferrite during secondary cooling of the present disclosure, island-shaped austenite isolated in growing bainitic ferrite may remain at room temperature without transformation of bainite and martensite occurring in the subsequent cooling process due to carbon enrichment. When the fraction of retained austenite is low, an effect on physical properties may be insignificant, but when the fraction exceeds 5%, hole expandability may deteriorate, and there may be a risk of hydrogen destruction. Accordingly, in the present disclosure, the fraction of retained austenite may be managed in an amount of, preferably, 5% or less, and, more preferably, 3% or less. Meanwhile, according to an embodiment of the present disclosure, more preferably, a lower limit of the fraction of retained austenite may be 0.9%, or an upper limit of the fraction of retained austenite may be 2.1%.

The hot-rolled steel sheet of the present disclosure having the above-described alloy composition and microstructure has high strength with yield strength (YS) of 900 MPa or more (or 948 to 1064 MPa) and tensile strength (TS) of 1,180 MPa or more (or 1204 to 1,343 MPa), and elongation (EI) (i.e. EI average) may be 7% or more (or 8.4 to 12.6%), standard deviation of elongation may be 2% or less (0.3 to 1.1%), and a hole expansion ratio (HER) may be 25% or more (or 27 to 360), and not only has excellent formability, but also has uniform material distribution in the steel sheet.

Next, another aspect of the present disclosure, which is a method of manufacturing an ultrahigh strength steel sheet having excellent formability and uniform materials in a steel sheet, will be described in detail below. However, this does not denote that the ultrahigh strength steel sheet of the present disclosure must be manufactured by the following manufacturing method.

The hot-rolled steel sheet according to the present disclosure may be manufactured by performing a series of processes [reheating - hot rolling - cooling - coiling] on a steel slab that satisfies the alloy composition proposed in the present disclosure. Hereinafter, each of the process conditions described above will be described in detail.

[Reheating Steel slab]

In the present disclosure, preferably, a steel slab may be reheated and homogenized prior to performing a rolling process, which may be performed in a temperature range of 1100 to 1350°C.

When the temperature during reheating of the steel slab is less than 1100°C, there may be a problem in that homogenization of alloy elements may be insufficient, but when the temperature exceeds 1350°C, there may be a risk that excessive oxides may be formed on a surface of the slab, deteriorating the surface quality of the steel sheet.

[Hot Rolling]

The reheated steel slab may be hot rolled to manufacture a hot-rolled steel sheet, and in this case, the hot rolling may be performed in a temperature range of 750 to 1150°C, and a total reduction ratio of final two passes may be controlled to 10 to 40%.

When the hot rolling is started at a temperature exceeding 1150°C, after rolling, excessive oxides may be formed on a surface of the steel sheet and may not be effectively controlled even after the pickling process to deteriorate surface quality. On the other hand, when the hot rolling is performed at a temperature below 750°C, there may be a problem in that rolling load may increase excessively, deteriorating workability, and ferrite is generated during the rolling, resulting in poor anisotropy.

Typically, the hot rolling is performed in multiple stages to reduce the rolling load and precisely control a thickness. In performing hot rolling with such multi-stage rolling, when a total sum of reduction ratio (or total reduction ratio) of the final 2 passes (2 subsequent passes) exceeds 40%, there may be a problem in that the rolling load in the final two passes becomes excessive, resulting in poor workability. On the other hand, when the total reduction ratio of the final two passes is less than 10%, there may be a problem in that the temperature of the steel sheet may decrease rapidly, causing shape defects. Meanwhile, according to an embodiment of the present disclosure, during the hot rolling, a lower limit of the total reduction ratio of the final two passes may be, more preferably, 25%, or an upper limit of the total reduction ratio of the final two passes during the hot rolling may be, more preferably, 38%.

Meanwhile, a grain size of austenite after hot rolling is affected by an alloy composition, a rolling end temperature, and a reduction ratio, which affects the ferrite and bainite formation behavior and final microstructure in the subsequent cooling process. Furthermore, the fraction and size of acicular ferrite or bainitic ferrite, which are main constitution phases in the present disclosure, are greatly influenced by the austenite grains after hot rolling.

In equiaxed ferrite and pearlite, because grains grow due to diffusion of elements during phase transformation, the size of the structure after phase transformation is affected by a phase transformation temperature and holding time. On the other hand, because acicular ferrite and bainitic ferrite generated by shear transformation, such as bainite, grow only in austenite grains, a size thereof may not be formed to be larger than the size of austenite before transformation. Accordingly, in order to control the size of acicular ferrite and bainitic ferrite, it is advantageous to control the grain size of austenite after hot rolling.

Accordingly, the present disclosure derives an effective grain size of austenite after hot rolling, as a relationship between a rolling end temperature (FDT) and a specific alloy composition, which is specifically defined by the following relational expression 1. That is, during hot rolling, finishing hot rolling is performed so that a value of Du, defined by the following relational expression 1, satisfies a range of 2 to 10 in the temperature range of 750 to 1150°C.

<Relational Expression 1>

$$Du=$$

$$FDT+(7.4\times[C])-(24.7\times[Si])-(4.7\times[Mn])-(3.9\times[Cr])-$$

$$(5.2\times[Mo])-(560\times[Ti])-(1110\times[Nb])\}\times0.049-34.2$$

(In the relational expression 1, FDT refers to a rolling end temperature (°C), and each of [C], [Si], [Mn], [Cr], [Mo], [Ti] and [Nb] represents a weight percent content of an element in parentheses.)

The Du is an indicator representing an effective grain size of austenite immediately before primary cooling after hot rolling, and when the value of Du defined by Relational Expression 1 above is 2 or more, an average particle diameter of the acicular ferrite and/or bainitic ferrite is 2.0 $\mu$m or more, thereby ensuring a hole expansion ratio of 25% or more.

On the other hand, when the value of Du defined by Relational Expression 1 above exceeds 10, the crystal grain size of austenite before transformation may become excessively coarse, resulting in poor impact resistance, and a grain boundary concentration of boron element may increase, delaying phase transformation during secondary cooling, resulting in poor elongation. Meanwhile, according to an embodiment of the present disclosure, a lower limit of the value of Du defined by Relational Expression 1 above may be, more preferably 4.4, or an upper limit of the value of Du defined by Relational Expression 1 above may be, more preferably, 7.8.

Meanwhile, according to an embodiment of the present disclosure, boron segregates at the grain boundaries of austenite and stabilizes the austenite grain boundaries, thereby serving as delaying the nucleation of ferrite and upper bainite and reducing a phase transformation rate. In order to secure an area fraction and average interval of the acicular ferrite or bainitic ferrite intended in the present disclosure, it may be decisive to control the concentration of boron segregated at the grain boundaries of austenite. The concentration of boron segregated at austenite grain boundaries shows different values for each grain boundary due to the influence of micro-segregation during casting and the grain size of austenite. Among these, nucleation of acicular ferrite or bainitic ferrite occurs selectively at austenite grain boundaries in which a boron element concentration is low, in the secondary cooling step. Generally, when the austenite grain size is small, the concentration of boron segregated at each grain boundary is low to perform the nucleation smoothly, and when the particle size is large, the concentration of boron segregated at the grain boundary is high to expect a delay in the nucleation. Accordingly, the concentration of boron present at the grain boundary and the phase transformation behavior during secondary cooling are affected by the content of boron added to steel and the grain size of austenite, as shown in Relational Expression 2.

Relational Equation 2 is an indicator of the concentration of boron (B) distributed at the grain boundaries of austenite just before cooling, and when a value of $Du \times Bat \times 2.968 \times 10^{10}$ according to Relationship Expression 2 below (i.e., a value of $Va[=Du \times Bat \times 2.968 \times 10^{10}]$) is less than $5.0 \times 10^6$, yield strength and tensile strength may not be secured because the fraction of acicular ferrite or bainitic ferrite is excessive. On the other hand, when a value of $Du \times Bat \times 2.968 \times 10^{10}$ according to Relational Expression 2 below exceeds $2.0 \times 10^7$, the elongation deteriorates because the secondary cooling time to secure the fraction of acicular ferrite or bainitic ferrite is significantly long. Meanwhile, according to an embodiment of the present disclosure, a lower limit of the value of Va may be, more preferably, $8.60 \times 10^6$, or an upper limit of the value of Va may be, more preferably, $1.89 \times 10^7$.

<Relational Expression 2>

$$5.0 \times 10^6 \leq Du \times Bat \times 2.968 \times 10^{10} \leq 2.0 \times 10^7$$

(In the Relational Expression 2, Du is the same as the definition in Relational Expression 1, Bat represents $55.845 \times [B]/(1080.6 + 45.04 \times [B])$, and [B] is a weight percent content of boron (B).)

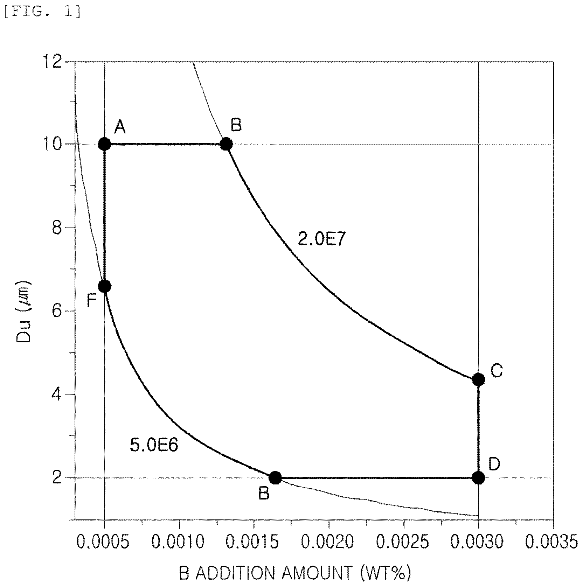

FIG. 1 is a graph illustrating a relationship between boron content and Du in which the above-mentioned Relational Expressions 1 and 2 are simultaneously satisfied, which may secure a microstructure intended in the present disclosure in a solid line connecting A-B-C-D-E-F.

[Cooling and Coiling]

The hot-rolled steel sheet manufactured as described above is cooled, and the cooling may be performed in stages according to a cooling temperature.

Specifically, the hot-rolled steel sheet may be primarily cooled to a temperature equal to or less than Bs at a cooling rate of 50°C/s or more, and may be secondarily cooled to a temperature of (Bs+Ms)/2 or more for ts time (seconds) defined in Relational Expression 3 at a cooling rate of 25°C/s or less, and may then be thirdly cooled at a cooling rate of 30°C/s or more to a temperature range of Ms°C to 500°C.

The hot-rolled steel sheet manufactured according to the process described above is quickly cooled equal to or less than a temperature (Bs) at which bainite begins to form, thereby suppressing the formation of ferrite (granular ferrite). Then, by slowly cooling the hot-rolled steel sheet for ts time (seconds) to a temperature intermediate between a bainite onset temperature (Bs) and a martensite onset temperature (Ms), or the temperature or higher, it may be possible to secure 10 to 25% of acicular ferrite or bainitic ferrite by area fraction. Meanwhile, according to an embodiment of the present disclosure, more preferably, a lower limit of a cooling end temperature (T1) of the primary cooling may be 500°C, or an upper limit of the cooling end temperature (T1) of the primary cooling may be 540°C.

When a cooling rate is less than 50°C/s when performing the primary cooling at a temperature equal to or less than Bs after completing the hot rolling, there may be a problem of excessive formation of a ferrite phase during cooling. In this case, an upper limit of the primary cooling rate is not particularly limited, but when the steel sheet is cooled significantly excessively, a shape of the sheet may be distorted, so that the cooling rate may be limited to 200°C/s or less. Meanwhile, according to an embodiment of the present disclosure, a lower limit of the cooling rate during the primary cooling may be, more preferably, 70°C/s, or an upper limit of the cooling rate during the primary cooling may be, more preferably, 100°C/s.

There is no particular limitation on the lower limit of the cooling end temperature during the primary cooling, but when the lower limit is excessively reduced, there may be a risk that the cooling time during the subsequent secondary cooling may not be sufficient, and thus, it should be noted that the lower limit may be limited to Bs-100°C.

When the temperature of the hot-rolled steel sheet becomes a temperature equal to or less than Bs by the primary cooling, strong cooling may be terminated, and secondary cooling may be performed at a cooling rate of 25°C/s or less and a temperature of (Bs+Ms)/2 or more.

While the primary cooled hot-rolled steel sheet is cooled from the primary cooled temperature to a target temperature for secondary cooling, growth of bainitic ferrite occurs, but specifically, in order to obtain a target fraction in the present disclosure, the secondary cooling may be maintained for a time (ts, seconds) that satisfies the following relational expression 3.

In Relational Expression 3, k(T) is an indicator of a growth rate of bainitic ferrite, and is influenced not only by the alloy composition of the steel, but also by the phase transformation temperature and grain size after hot rolling. Accordingly, when a value of Relational Expression 3, that is, a relationship between k(T) and retention time $(\exp(-k(T) \times (ts)^2))$, is less than 0.75, the fraction of acicular ferrite or bainitic ferrite becomes excessive, and thus, elongation is excellent, but a target level of strength may not be secured. On the other hand, when the value exceeds 0.9, there may be a problem of deterioration of the elongation.

$$<Relational\ Expression\ 3>$$

$$0.75 \le \exp(-k(T) \times (ts)^2) \le 0.9$$

(The k(T) represents a value defined by Relational Expression 4 below.)

$$<Relational\ Expression\ 4>$$

$$k(T) = \frac{20}{D_u} \times \exp\left\{-\left(\frac{(T1 + 2 \times T2)/3 - 557 + 320 \times [C] + 35 \times [Si] + 90 \times [Mn] + 70 \times [Cr] + 120 \times [Mo] + 160000 \times [Bat]}{112}\right)^{1.92}\right\}$$

(In Relational Expression 4 above, Du is the same as the definition in Relational Expression 1, and Bat is the same as the definition in Relational Expression 2. Furthermore, T1 represents the primary cooling end temperature [°C], and T2 represents the secondary cooling end temperature [°C]. Additionally, each of [C], [Si], [Mn], [Cr] and [Mo] represents a weight percent content of an element in parentheses.)

During the secondary cooling according to the above-mentioned conditions, the temperature of the steel sheet may increase due to transformation heat generation caused by bainite phase transformation. In this case, because the dislocation density may be excessively reduced due to excessive heat generation, in order to minimize a temperature increase of the steel sheet due to transformation heat, the cooling rate during the secondary cooling may be controlled to 25°C/s or less. When the cooling rate exceeds 25°C/s, a sheet shape may be distorted. It should be noted that in the present disclosure, the secondary cooling also includes an air cooling process. Meanwhile, according to an embodiment of the present disclosure, more preferably, a lower limit of the cooling rate during the secondary cooling may be 5.0°C/s, or an upper limit of the cooling rate during the secondary cooling may be 20.0°C/s.

Alternatively, according to an embodiment of the present disclosure, more preferably, a lower limit of a value of $\exp(-k(T) \times (ts)^2)$ according to Relational Expression 3 may be 0.79, or an upper limit of a value of $\exp(-k(T) \times (ts)^2)$ according to Relational Expression 3 may be 0.88.

Alternatively, according to an embodiment of the present disclosure, a cooling end temperature (T2) of the secondary cooling may be lower than a cooling end temperature of the primary cooling. Alternatively, preferably, the cooling end temperature of the secondary cooling (T2) may be a temperature that is 20°C or more lower than the cooling end temperature (T1) of the primary cooling. More preferably, the cooling end temperature (T2) of the secondary cooling may be 20°C lower than the cooling end temperature (T1) of the primary cooling.

Alternatively, according to an embodiment of the present disclosure, more preferably, the lower limit of the cooling end temperature (T2) of the secondary cooling may be 480°C, or the upper limit of the cooling end temperature (T2) of the secondary cooling may be 520°C.

Alternatively, according to an embodiment of the present disclosure, more preferably, the lower limit of the cooling time of the secondary cooling may be 1.0 seconds, or the upper limit of the cooling time of the secondary cooling may be 4.0 seconds.

The hot-rolled steel sheet that has completed the second cooling described above may be thirdly cooled at a cooling rate of 30°C/s or more up to a temperature range of Ms to 500°C, and then, the hot-rolled steel sheet may be coiled at that temperature. During the tertiary cooling, transformation of low-temperature bainite may be performed, and a portion of untransformed austenite may be transformed into martensite even after coiling.

Accordingly, by setting the cooling rate at 30°C/s or more during the tertiary cooling, the generation of additional high-temperature bainite during cooling may be avoided. On the other hand, when the cooling rate is significantly fast, a plate shape is distorted by a large amount of cooling water, and shape defects may cause temperature deviation again, thereby increasing material deviation in the sheet. Accordingly, in the present disclosure, the cooling rate in the tertiary cooling step involving rapid phase transformation may be performed at, preferably, 100°C/s or less. Meanwhile, according to an embodiment of the present disclosure, a lower limit of the cooling rate during the tertiary cooling may be, more preferably, 35°C/s, or an upper limit of the cooling rate during the tertiary cooling may be, more preferably, 80°C/s.

On the other hand, when the cooling end temperature, that is, a coiling temperature, exceeds 500°C, the dislocation density in low-temperature bainite and martensite may decrease excessively and the carbides may become coarse, so that the yield strength and tensile strength may deteriorate. On the other hand, when the coiling temperature is equal to or less than Ms, martensite transformation proceeds just before coiling, which may cause shape defects and temperature deviations, and may increase material deviation in the steel sheet.

In the present disclosure, Bs and Ms may be derived by the following expressions, and each element denotes a weight content.

$$Bs(°C) = 830 - 320 \times [C] - 90 \times [Mn] - 35 \times [Si] - 70 \times [Cr] - 120 \times [Mo]$$

$$Ms(°C) = 550 - 330 \times [C] - 41 \times [Mn] - 20 \times [Si] - 20 \times [Cr] - 10 \times [Mo] + 30 \times [Al]$$

Meanwhile, according to an embodiment of the present disclosure, more preferably, a lower limit of the cooling end temperature of the tertiary cooling may be 400°C, or a upper limit of the cooling end temperature of the tertiary cooling may be 430°C.

[Final Cooling]

After completing the cooling and coiling processes described above, a target hot-rolled steel sheet may be obtained by final cooling. In this case, the final cooling may be completed by air cooling to room temperature.

Meanwhile, the hot-rolled steel sheet of the present disclosure obtained by completing the final cooling as described above may be additionally pickled and oiled.

Additionally, a hot-dip galvanizing process may be performed by heating the pickled and oiled hot-rolled steel sheet to a temperature range of 420 to 740°C.

The hot dip galvanizing process may use a zinc-based plating bath, and there is no particular limitation on the alloy composition in the zinc-based plating bath.

Mode for Invention

Hereinafter, the present disclosure will be described in more detail through embodiments. However, it should be noted that the following embodiments are intended only to explain the present disclosure through examples, and are not intended to limit the scope of the present disclosure. This is because the scope of the present disclosure is determined by the matters described in the claims and matters reasonably inferred therefrom.

<Example>

A steel slab having an alloy composition of Table 1 below was prepared, and in this case, the remaining components of each steel slab were Fe and inevitable impurity elements.

After reheating each prepared steel slab at 1200°C, a hot-rolled steel sheet having a thickness of 2.5 mm was manufactured through hot rolling, cooling, winding, and final cooling (air cooling) processes under the conditions shown in Table 2 below. During the hot rolling, the total reduction ratios of the final two passes were applied equally at 25%, and during the first cooling, a cooling rate was uniformly applied at 70°C/s, and during the third cooling, a cooling rate was uniformly applied at 35°C/s.

Mechanical properties were measured for each hot rolled steel sheet, and microstructure was observed, and the results are illustrated in Tables 3 and 4 below.

Among the mechanical properties, yield strength, tensile strength, and elongation were measured at room temperature using a universal tensile tester after collecting JIS-5 standard specimens from 5 locations in a direction perpendicular to a rolling direction. In this case, the yield strength, the tensile strength, and the elongation were expressed as 0.2% off-set yield strength, maximum tensile strength, and fracture elongation, respectively, and the elongation was also represented by the standard deviation measured at five locations.

Furthermore, hole expandability was measured according to the ISO TS16630 standard method for the same specimen as in the tensile test.

Furthermore, a microstructure of each hot-rolled steel sheet was observed at 10,000 magnification using a scanning electron microscope and image analyzer after etching the same specimen as during the tensile test using a Nital etching method, and fractions of each phase were calculated. An average size of one or more selected from acicular ferrite and bainitic ferrite indicated a diameter corresponding to a circle, and an average interval of one or more selected from acicular ferrite and bainitic ferrite marked an average of distances between the five closest structures for each microtissue.

In this case, the microstructure was observed on a cross-section of the specimen, that is, the cross section, perpendicular to a rolling direction.

Table 1:

| STEEL TYPE | COMPOSITION (WT.%); BALANCE OF FE AND OTHER INEVITABLE IMPURITY ELEMENTS | | | | | | | | | | | |
|---|---|---|---|---|---|---|---|---|---|---|---|---|
| | C | Si | Mn | P | S | Sol. Al | Cr | Mo | Ti | Nb | B | N |
| STEEL TYPE 1 | 0.12 | 0.9 | 2.3 | 0.011 | 0.0008 | 0.024 | 0 | 0 | 0.12 | 0 | 0.0013 | 0.003 |
| STEEL TYPE 2 | 0.09 | 0.2 | 2.5 | 0.012 | 0.0003 | 0.025 | 0.5 | 0 | 0.08 | 0 | 0.0014 | 0.004 |
| STEEL TYPE 3 | 0.12 | 0.7 | 2.1 | 0.012 | 0.0005 | 0.025 | 0.2 | 0.15 | 0.08 | 0.02 | 0.0009 | 0.004 |
| STEEL TYPE 4 | 0.15 | 0.2 | 1.8 | 0.012 | 0.0012 | 0.025 | 0 | 0 | 0.08 | 0 | 0.0018 | 0.004 |
| STEEL TYPE 5 | 0.09 | 0.7 | 2.1 | 0.013 | 0.0003 | 0.025 | 0.2 | 0.15 | 0.12 | 0.02 | 0.0021 | 0.004 |
| STEEL TYPE 6 | 0.12 | 1.3 | 2.1 | 0.012 | 0.0003 | 0.025 | 0 | 0.25 | 0.06 | 0.03 | 0.0015 | 0.005 |
| STEEL TYPE 7 | 0.09 | 1.3 | 1.8 | 0.012 | 0.0003 | 0.025 | 0.9 | 0 | 0.12 | 0 | 0.0012 | 0.004 |
| STEEL TYPE 8 | 0.11 | 0.9 | 2.3 | 0.012 | 0.0006 | 0.025 | 0 | 0.1 | 0.02 | 0.05 | 0.0021 | 0.006 |
| STEEL TYPE 9 | 0.15 | 1.2 | 2.1 | 0.012 | 0.0006 | 0.025 | 0.2 | 0.1 | 0.08 | 0 | 0.0015 | 0.005 |
| STEEL TYPE 10 | 0.09 | 1.2 | 2.3 | 0.012 | 0.0003 | 0.025 | 0 | 0 | 0.08 | 0 | 0 | 0.004 |
| STEEL TYPE 11 | 0.09 | 1.1 | 2.4 | 0.011 | 0.0003 | 0.025 | 0 | 0 | 0.08 | 0 | 0.0025 | 0.004 |
| STEEL TYPE 12 | 0.09 | 0 | 2.5 | 0.012 | 0.0003 | 0.025 | 0.3 | 0 | 0.12 | 0.03 | 0.0008 | 0.004 |
| STEEL TYPE 13 | 0.07 | 0.7 | 2.1 | 0.012 | 0.0003 | 0.025 | 0.5 | 0 | 0.09 | 0.05 | 0.0025 | 0.004 |
| STEEL TYPE 14 | 0.12 | 0.9 | 2.3 | 0.012 | 0.0008 | 0.023 | 0 | 0 | 0.02 | 0 | 0.0007 | 0.003 |
| STEEL TYPE 15 | 0.17 | 0.9 | 1.5 | 0.011 | 0.0007 | 0.024 | 0 | 0 | 0.12 | 0 | 0.0013 | 0.003 |

Table 2:

| STEEL TYPE | HOT ROLLING | | | PRIMARY COOLING | | SECONDARY COOLING | | | | | TERTIARY COOLING | DIVISION |
|---|---|---|---|---|---|---|---|---|---|---|---|---|
| | FDT | Du* | Va* | END TEMPERATURE T1 (°C) | Bs (°C) | END TEMPERATURE T2 (°C) | (Bs+Ms) /2 (°C) | COOLING TIME (s) | RELATIONAL EXPRESSION 3 | COOLING RATE (°C/s) | END TEMPERATURE (°C) | |
| STEEL TYPE 1 | 920 | 6.0 | $1.20 \times 10^7$ | 500 | 553.1 | 480 | 476.0 | 1.5 | 0.81 | 13.3 | 405 | INVENTIVE EXAMPLE 1 |
| STEEL TYPE 2 | 920 | 7.8 | $1.68 \times 10^7$ | 500 | 534.2 | 480 | 469.4 | 2.0 | 0.86 | 10.0 | 410 | INVENTIVE EXAMPLE 2 |
| STEEL TYPE 3 | 920 | 6.2 | $8.60 \times 10^6$ | 500 | 546.1 | 480 | 475.8 | 1.5 | 0.83 | 13.3 | 410 | INVENTIVE EXAMPLE 3 |
| STEEL TYPE 4 | 895 | 6.9 | $1.89 \times 10^7$ | 540 | 613.0 | 520 | 518.2 | 1.0 | 0.88 | 20.0 | 430 | INVENTIVE EXAMPLE 4 |
| STEEL TYPE 5 | 905 | 4.4 | $1.41 \times 10^7$ | 520 | 555.7 | 500 | 485.6 | 2.0 | 0.79 | 10.0 | 420 | INVENTIVE EXAMPLE 5 |
| STEEL TYPE 6 | 925 | 5.8 | $1.33 \times 10^7$ | 520 | 527.1 | 500 | 461.8 | 3.0 | 0.85 | 6.7 | 405 | INVENTIVE EXAMPLE S |
| STEEL TYPE 1 | 920 | 6.0 | $1.20 \times 10^7$ | 520 | 553.1 | 500 | 476.0 | 2.0 | 0.82 | 10.0 | 405 | INVENTIVE EXAMPLE 7 |
| STEEL TYPE 1 | 920 | 6.0 | $1.20 \times 10^7$ | 520 | 553.1 | 500 | 476.0 | 2.0 | 0.82 | 10.0 | 405 | INVENTIVE EXAMPLE 8 |
| STEEL TYPE 7 | 910 | 5.0 | $9.15 \times 10^6$ | 510 | 530.7 | 490 | 467.0 | 2.0 | 0.86 | 10.0 | 410 | INVENTIVE EXAMPLE 9 |
| STEEL TYPE 8 | 890 | 4.5 | $1.46 \times 10^7$ | 520 | 544.3 | 500 | 472.7 | 2.0 | 0.86 | 10.0 | 410 | INVENTIVE EXAMPLE 10 |
| STEEL TYPE 9 | 920 | 6.7 | $1.55 \times 10^7$ | 520 | 525.0 | 500 | 455.6 | 3.0 | 0.88 | 6.7 | 400 | INVENTIVE EXAMPLE 11 |
| STEEL TYPE 9 | 920 | 6.7 | $1.55 \times 10^7$ | 520 | 525.0 | 500 | 455.6 | 4.0 | 0.79 | 5.0 | 400 | INVENTIVE EXAMPLE 12 |

| STEEL TYPE | HOT ROLLING | | | PRIMARY COOLING | | SECONDARY COOLING | | | | | TERTIARY COOLING | DIVISION |
|---|---|---|---|---|---|---|---|---|---|---|---|---|
| | FDT | Du* | Va* | END TEMPERATURE T1 (°C) | Bs (°C) | END TEMPERATURE T2 (°C) | (Bs+Ms)/2 (°C) | COOLING TIME (s) | RELATIONAL EXPRESSION 3 | COOLING RATE (°C/s) | END TEMPERATURE (°C) | |
| STEEL TYPE 10 | 925 | 7.0 | 0 | 520 | 552.2 | 500 | 477.5 | 2.0 | 0.79 | 10.0 | 410 | COMPARATIVE EXAMPLE 1 |
| STEEL TYPE 11 | 925 | 7.1 | 2.71X10$^7$ | 520 | 546.7 | 500 | 473.7 | 3.0 | 0.81 | 6.7 | 410 | COMPARATIVE EXAMPLE 2 |
| STEEL TYPE 12 | 875 | 3.2 | 3.87X10$^6$ | 540 | 555.2 | 520 | 483.9 | 2.0 | 0.80 | 10.0 | 420 | COMPARATIVE EXAMPLE 3 |
| STEEL TYPE 13 | 870 | 1.8 | 7.05×10$^6$ | 540 | 559.1 | 520 | 488.3 | 2.0 | 0.76 | 10.0 | 420 | COMPARATIVE EXAMPLE 4 |
| STEEL TYPE 6 | 925 | 5.8 | 1.33X10$^7$ | 520 | 527.1 | 500 | 461.8 | 1.0 | 0.98 | 20.0 | 405 | COMPARATIVE EXAMPLE 5 |
| STEEL TYPE 14 | 960 | 10.7 | 1.15X10$^7$ | 450 | 553.1 | 430 | 476.0 | 1.0 | 0.78 | 20.0 | 405 | COMPARATIVE EXAMPLE S |
| STEEL TYPE 15 | 920 | 6.2 | 1.20×10$^7$ | 500 | 609.1 | 480 | 512.11 | 1.5 | 0.38 | 13.3 | 350 | COMPARATIVE EXAMPLE 7 |

FDT*: Finish Rolling Temperature [°C] Du* = {FDT + (7.4 × [C]) - (24.7 × [Si]) - (4.7 × [Mn]) - (3.9 × [Cr]) - (5.2 × [Mo]) - (560 × [Ti]) - (1110 × [Nb])} × 0.049 - 34.2

$$Va* = Du \times Bat \times 2.968 \times 10^{10}$$

Table 3:

| DIVISION | MICROSTRUCTURE AREA FRACTION (%) | | | AC or BF DISTRIBUTION | |
|---|---|---|---|---|---|
| | LB+M | AC+BF | Austenite | AVERAGE SIZE (μm) | AVERAGE INTERVAL (μm) |
| INVENTIVE EXAMPLE 1 | 78.9 | 19.0 | 2.1 | 5.8 | 9.8 |
| INVENTIVE EXAMPLE 2 | 84.0 | 14.0 | 2.0 | 6.2 | 13.2 |
| INVENTIVE EXAMPLE 3 | 81.5 | 16.4 | 2.1 | 5.4 | 11.2 |
| INVENTIVE EXAMPLE 4 | 86.6 | 12.4 | 1.0 | 5.6 | 12.8 |
| INVENTIVE EXAMPLE 5 | 78.1 | 20.5 | 1.4 | 3.9 | 6.2 |
| INVENTIVE EXAMPLE S | 83.8 | 15.3 | 0.9 | 5.2 | 10.2 |
| INVENTIVE EXAMPLE 7 | 80.3 | 17.6 | 2.1 | 5.8 | 11.2 |
| INVENTIVE EXAMPLE S | 80.6 | 17.6 | 1.8 | 5.6 | 10.8 |
| INVENTIVE EXAMPLE S | 84.5 | 14.5 | 1.0 | 4.3 | 8.8 |
| INVENTIVE EXAMPLE 10 | 85.1 | 13.8 | 1.1 | 4.1 | 8.2 |
| INVENTIVE EXAMPLE 11 | 85.8 | 12.4 | 1.8 | 6.2 | 13.2 |
| INVENTIVE EXAMPLE 12 | 76.9 | 21.0 | 2.1 | 5.7 | 9.8 |
| COMPARATIVE EXAMPLE 1 | 23.8 | 76.2 | 0.0 | 6.8 | 5.2 |
| COMPARATIVE EXAMPLE 2 | 93.8 | 6.2 | 0.0 | 1.5 | 5.2 |
| COMPARATIVE EXAMPLE 3 | 65.9 | 32.0 | 2.1 | 3.1 | 3.6 |
| COMPARATIVE EXAMPLE 4 | 76.4 | 23.6 | 0.0 | 1.6 | 2.9 |
| COMPARATIVE EXAMPLE 5 | 95.7 | 1.8 | 2.5 | 0.5 | 3.2 |
| COMPARATIVE EXAMPLE 6 | 76.5 | 21.6 | 1.9 | 8.7 | 2.3 |
| COMPARATIVE EXAMPLE 7 | 78.9 | 19.0 | 2.1 | 4.8 | 9.5 |

AC: Acicular ferrite
BF: Bainitic ferrite
LB: Low-Temperature Bainite
M: Martensite

Table 4:

| DIVISION | MECHANICAL PROPERTIES | | | | |
|---|---|---|---|---|---|
| | YS (MPa) | TS (MPa) | EIAVERAGE (%) | E1 STANDARD DEVIATION (%) | HER (%) |
| INVENTIVE EXAMPLE 1 | 972 | 1231 | 10.0 | 0.3 | 36 |
| INVENTIVE EXAMPLE 2 | 990 | 1267 | 10.2 | 0.4 | 27 |
| INVENTIVE EXAMPLE 3 | 979 | 1245 | 11.4 | 0.5 | 29 |
| INVENTIVE EXAMPLE 4 | 953 | 1239 | 8.9 | 0.9 | 30 |
| INVENTIVE EXAMPLE 5 | 948 | 1204 | 12.6 | 0.4 | 36 |
| INVENTIVE EXAMPLE 6 | 1034 | 1302 | 11.4 | 0.8 | 29 |
| INVENTIVE EXAMPLE 7 | 962 | 1224 | 9.3 | 1.1 | 30 |
| INVENTIVE EXAMPLE 8 | 1004 | 1267 | 11.5 | 0.8 | 29 |

(continued)

| DIVISION | MECHANICAL PROPERTIES | | | | |
|---|---|---|---|---|---|
| | YS (MPa) | TS (MPa) | EIAVERAGE (%) | E1 STANDARD DEVIATION (%) | HER (%) |
| INVENTIVE EXAMPLE 9 | 1033 | 1303 | 8.4 | 0.3 | 29 |
| INVENTIVE EXAMPLE 10 | 1032 | 1310 | 9.9 | 0.9 | 26 |
| INVENTIVE EXAMPLE 11 | 1064 | 1343 | 9.1 | 0.4 | 28 |
| INVENTIVE EXAMPLE 12 | 1005 | 1262 | 10.3 | 0.8 | 28 |
| COMPARATIVE EXAMPLE 1 | 603 | 717 | 30.2 | 1.3 | 48 |
| COMPARATIVE EXAMPLE 2 | 1084 | 1380 | 5.1 | 0.2 | 32 |
| COMPARATIVE EXAMPLE 3 | 844 | 1079 | 18.3 | 0.9 | 34 |
| CCMFARATIVE EXAMPLE 4 | 926 | 1178 | 14.6 | 1.7 | 21 |
| COMPARATIVE EXAMPLE 5 | 1116 | 1415 | 3.2 | 0.2 | 25 |
| COMPARATIVE EXAMPLE 6 | 948 | 1203 | 11.2 | 0.8 | 17 |
| COMPARATIVE EXAMPLE 7 | 1022 | 1281 | 8.8 | 2.2 | 27 |
| YS: Yield Strength<br>TS: Tensile Strength<br>EI: Elongation<br>HER: Hole Expansion Ratio | | | | | |

As illustrated in Tables 1 to 3 above, Inventive Examples 1 to 12 satisfying all of the alloy composition and manufacturing conditions proposed in the present disclosure were configured to meet a microstructure proposed in the present disclosure, thereby securing the target strength and formability.

On the other hand, Comparative Example 1, which dissatisfies the alloy composition system proposed in the present disclosure because boron was not added, made it impossible to secure the target strength due to excessive generation of acicular ferrite and bainitic ferrite during the secondary cooling, and due to this low strength, the elongation tended to be relatively high.

On the other hand, in Comparative Examples 2 to 8, the alloy composition satisfies the present disclosure, but the manufacturing conditions deviate from the present disclosure.

Among these, Comparative Examples 2 and 3 are cases where the boron concentration present at the grain boundaries is not appropriate and thus deviates from Relational Expression 2. In Comparative Example 2, the concentration of boron present at the grain boundaries was excessive, and the fraction of a soft structure, which was the secondary phase, was insufficient, and thus, the elongation was not able to be secured. On the other hand, in Comparative Example 3, the concentration of boron present at the grain boundaries was insufficient, and the fraction of a soft structure, which was the secondary phase, was excessive, and thus, the yield strength and tensile strength were not able to be secured.

Comparative Example 4 is a case in which a value of Du defined from Relational Expression 1 does not meet a range of 2 to 10, and a size of the soft structure, which was the secondary phase, was not able to be secured to be larger than 2 $\mu$m. Accordingly, the stress concentration during deformation could not be effectively distributed, and as a result, the hole expandability deteriorated.

In Comparative Example 5, Relational Expression 3 was not able to be satisfied due to insufficient secondary cooling time, and as a result, the elongation deteriorated due to the insufficient fraction of the soft structure, which was the secondary phase.

In Comparative Example 6, since an austenite grain size after hot rolling was significantly coarse, a value of Du defined by Relational Expression 1 did not meet a range of 2 to 10. Accordingly, the soft structure, which was the secondary phase, was not evenly distributed, and an average interval thereof was less than 3 $\mu$m, and because the secondary phase was locally dense, stress concentration was not able to be dispersed effectively during deformation, resulting in poor hole expandability.

In Comparative Example 7, not only was the Mn content insufficient, but the tertiary cooling end temperature was significantly low, and thus, martensite was generated during tertiary cooling, and due to excessive temperature variation in the sheet, the standard deviation of the elongation was 2% or more, resulting in poor material variation in the steel sheet.

FIG. 1 is a graph illustrating a relationship between boron content and Du in which Relational Expression 1 and Relational Expression 2 are simultaneously satisfied. A microstructure intended in the present disclosure may be secured in a solid line connecting A-B-C-D-E-F.

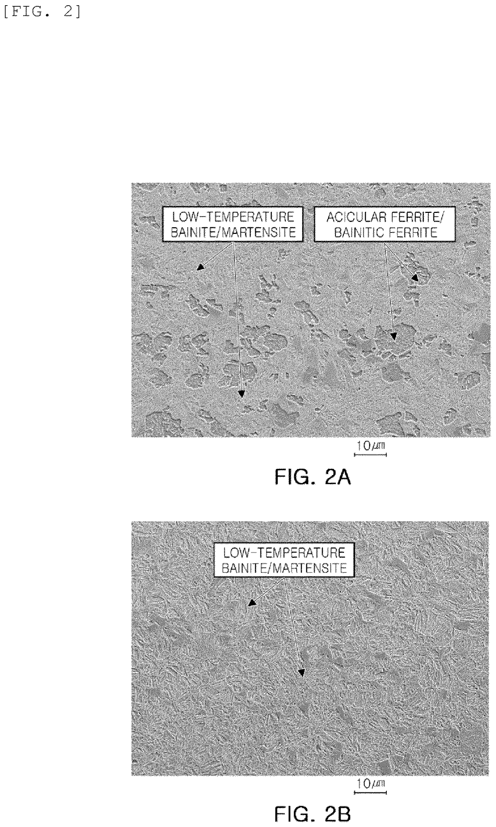

FIG. 2 shows an image of a microstructure of Inventive Example 1 and Comparative Example 5 observed with a scanning electron microscope (SEM). As illustrated in FIG. 2A, Inventive Example 1 showed that a matrix structure and secondary phase to be implemented in the present disclosure through the microstructure were properly formed. On the other hand, as illustrated in FIG. 2B, it may be confirmed that in Comparative Example 5, the soft structure, which was the secondary phase, was not sufficiently generated.

**Claims**

1. An ultrahigh-strength hot-rolled steel sheet, comprising: by wt%, carbon (): 0.06 to 0.18%, silicon (Si): 0.01 to 1.8%, manganese (Mn): 1.6 to 3.5%, aluminum (Al): 0.001 to 0.1%, chromium (Cr): 2.5 % or less (including 0%), molybdenum (Mo): 2.0% or less (including 0%), titanium (Ti): 0.01 to 0.15%, boron (B): 0.0005 to 0.003%, phosphorus (P): 0.0001 to 0.05 %, sulfur (S): 0.0001 to 0.05%, nitrogen (N): 0.0001 to 0.02%, and a balance of Fe and other inevitable impurity elements,

   wherein a microstructure comprises, in area fraction, one or more selected from low-temperature bainite and martensite: 75 to 90%, one or more selected from acicular ferrite and bainitic ferrite: 10 to 25%, and other phases: 5% or less (including 0%).

2. The ultrahigh-strength hot-rolled steel sheet of claim 1, wherein the hot-rolled steel sheet further comprises niobium (Nb): 0.01 to 0.2%.

3. The ultrahigh-strength hot-rolled steel sheet of claim 1, wherein an average size of one or more selected from the acicular ferrite and bainitic ferrite is 2.0 $\mu$m or more.

4. The ultrahigh-strength hot-rolled steel sheet of claim 1, wherein an average interval of one or more selected from the acicular ferrite and bainitic ferrite is 3 $\mu$m or more.

5. The ultrahigh-strength hot-rolled steel sheet of claim 1, wherein the hot-rolled steel sheet has yield strength of 900 MPa or more, tensile strength of 1180 MPa or more, elongation of 7% or more, and standard deviation of elongation of 2% or less.

6. The ultrahigh-strength hot-rolled steel sheet of claim 1, having a hole expansion ratio of 25% or more.

7. A method for manufacturing an ultrahigh-strength hot-rolled steel sheet, the method comprising:

   reheating a steel slab at a temperature range of 1100 to 1350°C, the steel slab comprising, by wt%, carbon (C): 0.06 to 0.18%, silicon (Si): 0.01 to 1.8%, manganese (Mn): 1.6 to 3.5%, aluminum (Al): 0.001 to 0.1%, chromium (Cr): 2.5 % or less (including 0%), molybdenum (Mo): 2.0% or less (including 0%), titanium (Ti): 0.01 to 0.15%, boron (B): 0.0005 to 0.003%, phosphorus (P): 0.0001 to 0.05 %, sulfur (S): 0.0001 to 0.05%, nitrogen (N): 0.0001 to 0.02%, and a balance of Fe and other inevitable impurity elements,
   manufacturing a hot-rolled steel sheet by hot rolling the reheated steel slab;
   primarily cooling the hot-rolled steel sheet to a temperature equal to or less than Bs at an average cooling rate of 50°C/s or more;
   after the primary cooling, performing secondary cooling for ts time(seconds) at an average cooling rate of 25°C/s or less to a temperature equal to or higher than (Bs+Ms)/2;
   after the secondary cooling, performing tertiary cooling at an average cooling rate of 30°C/s or more to a temperature range of Ms°C to 500°C; and
   coiling in a tertiary cooling temperature range,
   wherein during the hot rolling, finish hot rolling is performed so that a value of Du, defined by the following relational expression 1, satisfies a range of 2 to 10 in a temperature range of 750 to 1150°C, Du = {FDT + (7.4 × [C]) - (24.7 × [Si]) - (4.7 × [Mn]) - (3.9 × [Cr]) - (5.2 × [Mo]) - (560 × [Ti]) - (1110 × [Nb])} × 0.049 - 34.2,　　　　<Relational Expression 1>

where FDT refers to a rolling end temperature (°C), and each of [C], [Si], [Mn], [Cr], [Mo], [Ti] and [Nb] represents a weight percent content of an element in parentheses.

8. The method for manufacturing an ultrahigh-strength hot-rolled steel sheet of claim 7, wherein during the hot rolling, the following relational expression 2 is further satisfied,

<Relational Expression 2>

$$5.0 \times 10^6 \leq Du \times Bat \times 2.968 \times 10^{10} \leq 2.0 \times 10^7,$$

where Du is the same as the definition in Relational Expression 1, Bat represents $55.845 \times [B]/(1080.6 + 45.04 \times [B])$, and [B] represents a weight percent content of boron (B).

9. The method for manufacturing an ultrahigh-strength hot-rolled steel sheet of claim 7, wherein during the hot rolling, a total reduction ratio of final two passes is 10 to 40%.

10. The method for manufacturing an ultrahigh-strength hot-rolled steel sheet of claim 8, wherein the following relational expression 3 is satisfied,

<Relational Expression 3>

$$0.75 \leq \exp(-k(T) \times (ts)^2) \leq 0.9$$

where the k(T) represents a value defined by the following relational expression 4,

<Relational Expression 4>

$$k(T) = \frac{20}{D_u} \times \exp\left\{ -\left( \frac{(T1 + 2 \times T2)/3 - 557 + 320 \times [C] + 35 \times [Si] + 90 \times [Mn] + 70 \times [Cr] + 120 \times [Mo] + 160000 \times [Bat]}{112} \right)^{1.92} \right\}$$

where, Du is the same as the definition in Relational Expression 1, and Bat is the same as the definition in Relational Expression 2. Additionally, T1 represents a primary cooling end temperature [°C], and T2 represents a secondary cooling end temperature [°C]. Additionally, each of [C], [Si], [Mn], [Cr], and [Mo] represents a weight percent content of an element in parentheses.

11. The method for manufacturing an ultrahigh-strength hot-rolled steel sheet of claim 7, further comprising: performing final cooling to a room temperature after the coiling.

12. The method for manufacturing an ultrahigh-strength hot-rolled steel sheet of claim 11, further comprising: pickling and oiling the cooled steel sheet after the final cooling.

13. The method for manufacturing an ultrahigh-strength hot-rolled steel sheet of claim 12, further comprising: hot-dip galvanizing the pickled and oiled steel sheet after the pickling and oiling.

[FIG. 1]

[FIG. 2]

FIG. 2A

FIG. 2B

## INTERNATIONAL SEARCH REPORT

| International application No. |
|---|
| **PCT/KR2022/018467** |

**A. CLASSIFICATION OF SUBJECT MATTER**

**C22C 38/38**(2006.01)i; **C22C 38/34**(2006.01)i; **C22C 38/22**(2006.01)i; **C22C 38/28**(2006.01)i; **C22C 38/32**(2006.01)i; **C22C 38/60**(2006.01)i; **C22C 38/00**(2006.01)i; **C21D 8/02**(2006.01)i; **C23G 1/02**(2006.01)i; **C23C 2/06**(2006.01)i

According to International Patent Classification (IPC) or to both national classification and IPC

**B. FIELDS SEARCHED**

Minimum documentation searched (classification system followed by classification symbols)

C22C 38/38(2006.01); B21B 3/00(2006.01); C21D 8/02(2006.01); C21D 9/46(2006.01); C22C 38/00(2006.01); C22C 38/14(2006.01); C22C 38/32(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 열연강판(hot rolled steel plate), 베이나이트(bainite), 마르텐사이트(martensite), 베이니틱 페라이트(bainitic ferrite), 애시큘러 페라이트(acicular ferrite)

**C. DOCUMENTS CONSIDERED TO BE RELEVANT**

| Category* | Citation of document, with indication, where appropriate, of the relevant passages | Relevant to claim No. |
|---|---|---|
| A | KR 10-2109272 B1 (POSCO) 11 May 2020 (2020-05-11)<br>See paragraphs [0092] and [0100] and claims 1 and 5. | 1-13 |
| A | JP 2009-007659 A (SUMITOMO METAL IND., LTD.) 15 January 2009 (2009-01-15)<br>See paragraphs [0062]-[0070] and claim 6. | 1-13 |
| A | US 2018-0265939 A1 (TATA STEEL IJMUIDEN B.V.) 20 September 2018 (2018-09-20)<br>See claim 1 and table 2. | 1-13 |
| A | KR 10-2019-0109459 A (JFE STEEL CORPORATION) 25 September 2019 (2019-09-25)<br>See paragraph [0105] and claims 1 and 6. | 1-13 |
| A | KR 10-1518600 B1 (POSCO) 07 May 2015 (2015-05-07)<br>See claims 1 and 8 and table 2. | 1-13 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 February 2023** | **21 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2022/018467**

| Patent document cited in search report | | | Publication date (day/month/year) | Patent family member(s) | | | Publication date (day/month/year) |
|---|---|---|---|---|---|---|---|
| KR | 10-2109272 | B1 | 11 May 2020 | KR | 10-2020-0037485 | A | 09 April 2020 |
| JP | 2009-007659 | A | 15 January 2009 | JP | 4888255 | B2 | 29 February 2012 |
| US | 2018-0265939 | A1 | 20 September 2018 | CA | 3000554 | A1 | 30 March 2017 |
| | | | | CN | 108350542 | A | 31 July 2018 |
| | | | | CN | 108350542 | B | 10 March 2020 |
| | | | | EP | 3147381 | A1 | 29 March 2017 |
| | | | | EP | 3147381 | B1 | 17 April 2019 |
| | | | | EP | 3353333 | A1 | 01 August 2018 |
| | | | | EP | 3353333 | B1 | 08 July 2020 |
| | | | | ES | 2725005 | T3 | 18 September 2019 |
| | | | | JP | 2018-532045 | A | 01 November 2018 |
| | | | | KR | 10-2018-0053397 | A | 21 May 2018 |
| | | | | TR | 201906728 | T4 | 21 May 2019 |
| | | | | US | 10870901 | B2 | 22 December 2020 |
| | | | | WO | 2017-050790 | A1 | 30 March 2017 |
| KR | 10-2019-0109459 | A | 25 September 2019 | CN | 110312814 | A | 08 October 2019 |
| | | | | CN | 110312814 | B | 01 October 2021 |
| | | | | EP | 3584337 | A1 | 25 December 2019 |
| | | | | EP | 3584337 | B1 | 23 December 2020 |
| | | | | JP | 6394841 | B1 | 26 September 2018 |
| | | | | MX | 2019009803 | A | 11 November 2019 |
| | | | | US | 2020-0063227 | A1 | 27 February 2020 |
| | | | | WO | 2018-150955 | A1 | 23 August 2018 |
| KR | 10-1518600 | B1 | 07 May 2015 | KR | 10-2015-0046927 | A | 04 May 2015 |

Form PCT/ISA/210 (patent family annex) (July 2022)

**REFERENCES CITED IN THE DESCRIPTION**

**Patent documents cited in the description**

- JP 2019553584 A